# EUROPEAN PATENT APPLICATION

(11) **EP 4 852 252 A1**
(43) Date of publication of application: **09.12.2026**
(21) Application number: 25859283.1
(22) Date of filing: 19.08.2025
(51) Int. Cl.: H02G 9/02, H01B 7/04, H01B 7/06, H01B 7/14

(54) **UNDERWATER DYNAMIC SUBMARINE CABLE SYSTEM SUITABLE FOR SHALLOW SEA AREAS**

(30) Priority: 30.08.2024 CN 202411217318
(71) Applicant: Zhongtian Technology Submarine Cable Co., Ltd., Nantong, Jiangsu 226000 (CN); Jiangsu Zhongtian Technology Co., Ltd., Nantong, Jiangsu 226000 (CN); South Sea Submarine Cable Co., Ltd., Shanwei, Guangdong 516545 (CN); Zhongtian Dafeng Submarine Cable Co., Ltd., Jiangsu 224145 (CN); Shandong Offshore Engineering Cable & Wire Co., Ltd., Weihai, Shandong 264515 (CN)
(72) Inventor: JIANG, Libin, Nantong, Jiangsu 226000 (CN); HU, Ming, Nantong, Jiangsu 226000 (CN); ZHANG, Hongliang, Nantong, Jiangsu 226000 (CN); PAN, Pan, Nantong, Jiangsu 226000 (CN); WANG, Liyuan, Nantong, Jiangsu 226000 (CN)
(74) Representative: Boult Wade Tennant LLP
(86) International application number: PCT/CN2025/115728
(87) International publication number: WO 2026/046001

(57) **Abstract**

The present invention relates to the technical field of dynamic submarine cables, and provides an underwater dynamic submarine cable system suitable for shallow sea areas, including a floating platform, a dynamic submarine cable, and a fixing assembly; the dynamic submarine cable includes an underwater configuration section and a pre-buried submarine cable section, the underwater configuration section being configured in a waveform state, and the pre-buried submarine cable section being fixedly arranged on the seabed; the fixing assembly includes a fixing base, a sleeve, and an anchor system, the fixing base being fixedly arranged on the seabed, the sleeve being sleeved on the submarine cable located between the underwater configuration section and the pre-buried submarine cable section, one end of the anchor system being fixedly connected to the fixing base, and the other end of the anchor system being slidably connected to the sleeve, to provide additional profile slack for the underwater configuration section and maintain the state stability of the underwater configuration section. By providing a fixing assembly on the cable located between the underwater configuration section and the pre-buried submarine cable section, and using the sliding connection between the anchor system and the sleeve, the dynamic submarine cable is provided with additional length slack when it shifts to a distal position, and provides a limiting function during the process of the dynamic submarine cable being at a proximal position, thereby maintaining the stability of the underwater configuration section.

## Description

This application claims priority to Chinese patent application No. 202411217318.5, filed with the China National Intellectual Property Administration on August 30, 2024, entitled "Underwater Dynamic Submarine Cable System Suitable for Shallow Sea Areas", which is hereby incorporated by reference in its entirety.

### TECHNICAL FIELD

The present invention relates to the technical field of dynamic submarine cables, and in particular, to an underwater dynamic submarine cable system suitable for shallow sea areas.

### BACKGROUND

China has a long coastline and abundant nearshore water resources. To utilize nearshore water areas, a waterborne floating power generation system is employed to realize the utilization of nearshore water areas. The waterborne floating power generation system usually includes a floating platform for power generation and an underwater dynamic submarine cable, which is used for transmitting electrical energy and various signals.

The nearshore sea area is characterized by shallow water depth and significant waves and ocean currents. When there is a navigation demand on the water surface or other reasons that make it impossible to arrange water surface profile, the water surface multi-wave dynamic submarine cable profile is no longer applicable, and an underwater dynamic submarine cable needs to be provided. When the water depth is as low as 15 m or even less, constructing an underwater multi-wave peak profile is difficult. When the dynamic submarine cable is at a distal position, it is prone to straightening and tensioning; and when the dynamic submarine cable is at a proximal position, it is prone to kinking, sinking to the seabed, floating up to the water surface, etc., which greatly threatens the service life of the dynamic submarine cable system.

### SUMMARY

The present invention provides an underwater dynamic submarine cable system suitable for shallow sea areas, for solving a defect of poor configuration stability of dynamic submarine cables in shallow sea areas in the prior art, and achieving a stable configuration for the dynamic submarine cables in shallow water areas.

The present invention provides an underwater dynamic submarine cable system suitable for shallow sea areas, including: a floating platform, a dynamic submarine cable, a bend stiffener, a buoyancy device, a counterweight device, and a fixing assembly; where, the dynamic submarine cable includes an underwater configuration section and a pre-buried submarine cable section, the underwater configuration section is configured in a waveform state, and the pre-buried submarine cable section is fixedly arranged on a seabed; the fixing assembly includes a fixing base, a sleeve, and an anchor system, the fixing base is fixedly arranged on the seabed, the sleeve is sleeved on the submarine cable that is located between the underwater configuration section and the pre-buried submarine cable section, one end of the anchor system is fixedly connected to the fixing base, and the other end of the anchor system is slidably connected to the sleeve, providing additional slack for the underwater configuration section to maintain the state stability of the underwater configuration section.

According to the dynamic submarine cable system suitable for shallow sea areas provided by the present invention, the sleeve includes a pipe body and a sliding structure; the pipe body is sleeved on the submarine cable; the pipe body is provided with a sliding slot; the sliding structure is disposed in the sliding slot so as to make the sliding structure slide along the sliding slot; and the anchor system is connected to the sliding structure.

According to the dynamic submarine cable system suitable for shallow sea areas provided by the present invention, the sliding structure includes a slider, which is slidably fitted with the sliding slot, the slider is provided with a lifting device, the lifting device is rotatably connected to the slider, and the lifting device is configured for connecting with the anchor system.

According to the dynamic submarine cable system suitable for shallow sea areas provided by the present invention, the sliding slot is arranged spirally around the pipe body.

According to the dynamic submarine cable system suitable for shallow sea areas provided by the present invention, the sliding structure includes a gear and a rack, the rack is embedded in one side wall of the sliding slot, the gear is slidably arranged in the sliding slot, and the gear is rotatable about its own central axis, the gear is meshed with the rack, the gear is provided with a lifting device, and the lifting device is rotatably connected to the gear.

According to the dynamic submarine cable system suitable for shallow sea areas provided by the present invention, the floating platform is provided with a power generation module, and the power generation module is electrically connected to the dynamic submarine cable.

According to the dynamic submarine cable system suitable for shallow sea areas provided by the present invention, the submarine cable body of the underwater configuration section is provided with buoyancy devices and counterweight devices, the buoyancy devices and the counterweight devices are alternately arranged at intervals, so as to form the waveform state through the buoyancy devices and the counterweight devices.

According to the dynamic submarine cable system suitable for shallow sea areas provided by the present invention, the fixing base includes a counterweight plate, the counterweight plate is arranged on the seabed, the counterweight plate is provided with a connection structure, and the connection structure is rotatably connected to the counterweight plate.

According to the dynamic submarine cable system suitable for shallow sea areas provided by the present invention, a bend stiffener is provided at a connection between the dynamic submarine cable and the floating platform, and the bend stiffener is used to prevent excessive bending of the dynamic submarine cable.

According to the dynamic submarine cable system suitable for shallow sea areas provided by the present invention, the sleeve extends from the underwater configuration section to the pre-buried submarine cable section, so as to completely cover a section of the dynamic submarine cable that contacts the seabed, and the sleeve is configured to prevent direct contact between the dynamic submarine cable and the seabed.

The present invention provides an underwater dynamic submarine cable system suitable for shallow sea areas. By providing a fixing assembly on the cable located between the underwater configuration section and the pre-buried submarine cable section, and using a sliding connection between the anchor system and the sleeve, the dynamic submarine cable is provided with additional profile slack when it shifts to a distal position, and excess profile length is recovered when the dynamic submarine cable is located at a proximal position, thereby maintaining the stability of the underwater configuration section. In addition, for the dynamic submarine cable that is in contact with the seabed, the sleeve plays a role of anti-wear protection.

In addition to the technical problems solved by the present application, the technical features constituting the technical solutions, and the beneficial effects brought about by the technical features of these technical solutions as described above, other technical problems that can be solved by the underwater dynamic submarine cable system for shallow sea areas provided by the present application, other technical features included in the technical solutions, and the beneficial effects brought about by these technical features will be further described in detail in the specific embodiments.

### BRIEF DESCRIPTION OF DRAWINGS

To more clearly illustrate the technical solutions in the embodiments of the present application or in the prior art, the following briefly introduces the drawings required for use in the description of the embodiments or the prior art. Obviously, the drawings in the following description are some embodiments of the present application, and for those of ordinary skill in the art, other drawings can be obtained based on these drawings without creative effort.
FIG. 1 is a schematic structural diagram of an underwater dynamic submarine cable system in an in-situ state provided by the present invention;
FIG. 2 is a schematic structural diagram of an end face of a sleeve in an underwater dynamic submarine cable system provided by the present invention;
FIG. 3 is one of schematic front views of a structure of a sleeve in an underwater dynamic submarine cable system provided by the present invention;
FIG. 4 is another schematic front view of a structure of a sleeve in an underwater dynamic submarine cable system provided by the present invention;
FIG. 5 is a schematic top view of a structure of a fixing base in an underwater dynamic submarine cable system provided by the present invention;
FIG. 6 is a schematic structural diagram of an underwater dynamic submarine cable system in a proximal state provided by the present invention;
FIG. 7 is a schematic structural diagram of an underwater dynamic submarine cable system in a distal state provided by the present invention.

Description of reference numerals of drawings:
1 - dynamic submarine cable; 2 - counterweight device; 3 - buoyancy device; 4 - sleeve; 41 - pipe body; 42 - metal frame; 43 - sliding slot; 44 - sliding structure; 441 - slider; 442 - gear; 45 - lifting device; 46 - rack; 47 - counterweight plate; 48 - connection structure; 5 - floating platform; 6 - anchoring part; 7 - bend stiffener; 8 - pre-buried submarine cable section; 9 - underwater configuration section.

### DESCRIPTION OF EMBODIMENTS

To make the purpose, technical solutions, and advantages of the present application clearer, the following clearly and completely describes the technical solutions in the embodiments of the present application with reference to the accompanying drawings in the embodiments of the present application. Obviously, the described embodiments are a part of the embodiments of the present application, not all of the embodiments. Based on the embodiments in the present application, all other embodiments obtained by those of ordinary skill in the art without creative effort fall within the scope of protection of the present application.

It should be noted that, without conflicting, the embodiments and features in the embodiments of the present invention can be combined with each other. The present invention will be described in detail below with reference to the accompanying drawings and in conjunction with the embodiments.

In the description of the embodiments of the present invention, it should be noted that the orientation or positional relationships indicated by the terms "center", "longitudinal", "lateral", "upper", "lower", "front", "rear", "left", "right", "vertical", "horizontal", "top", "bottom", "inner", "outer", etc. are based on the orientation or positional relationships shown in the drawings, and are only for the convenience of describing the embodiments of the present invention and simplifying the description, rather than indicating or implying that the device or element referred to must have a specific orientation, and be constructed and operate in a specific orientation, and therefore cannot be construed as a limitation on the embodiments of the present invention. In addition, the terms "first", "second", and "third" are used for descriptive purposes only and cannot be understood as indicating or implying relative importance.

In the description of the embodiments of the present invention, it should be noted that unless otherwise clearly specified and limited, the terms "connecting", and "connection" should be understood in a broad sense. For example, it may be a fixed connection, a detachable connection, or an integral connection; it may be a mechanical connection or an electrical connection; or it may be a direct connection or an indirect connection through an intermediate medium. For those of ordinary skill in the art, the specific meanings of the above terms in the present invention can be understood according to specific situations.

In the embodiments of the present invention, unless otherwise clearly specified and limited, a first feature being "on" or "below" a second feature may mean that the first and second features are in direct contact, or that the first and second features are in indirect contact through an intermediate medium. Moreover, a first feature being "above", "over", or "on top of" a second feature may mean that the first feature is directly above or diagonally above the second feature, or merely indicates that the horizontal height of the first feature is greater than that of the second feature. A first feature being "under", "below", or "beneath" a second feature may mean that the first feature is directly below or diagonally below the second feature, or merely indicates that the horizontal height of the first feature is less than that of the second feature.

In the description of this specification, descriptions with reference to the terms "an embodiment", "some embodiments", "example", "specific example" or "some examples" etc., mean that specific features, structures, materials, or characteristics described with reference to the embodiment or example are included in at least one embodiment or example of the embodiments of the present invention. In this specification, the schematic expressions of the above terms do not necessarily refer to the same embodiment or example. Furthermore, the specific features, structures, materials, or characteristics described may be combined in any suitable manner in any one or more embodiments or examples. In addition, without mutual contradiction, those skilled in the art can combine and integrate different embodiments or examples described in this specification, as well as the features of the different embodiments or examples.

In shallow sea areas, due to the relatively small seawater depth, it is difficult to construct an underwater wave peak profile for a dynamic submarine cable. Moreover, since the entire water area is shallow, the wavy dynamic submarine cable has limited slack, making it prone to straightening and tensioning when the dynamic submarine cable is at a distal position, and prone to kinking, sinking to the seabed, and floating up to the water surface when it is at a proximal position, etc., which greatly threatens the service life of a dynamic submarine cable system.

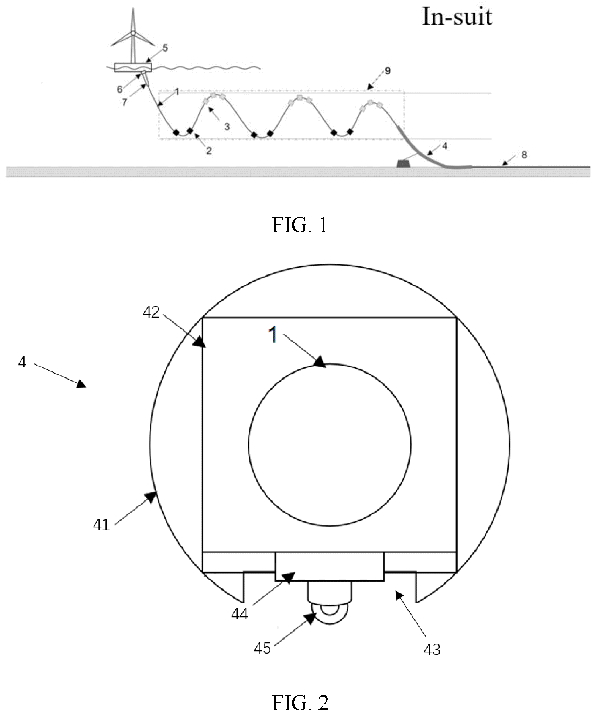

For the problems in the related art, as shown in FIGS. 1-4, this embodiment provides an underwater dynamic submarine cable system suitable for shallow sea areas, including a floating platform 5, a dynamic submarine cable 1, and a fixing assembly. The dynamic submarine cable 1 includes an underwater configuration section 9 and a pre-buried submarine cable section 8; the underwater configuration section 9 is configured in a waveform state, and the pre-buried submarine cable section 8 is fixedly arranged on the seabed; the fixing assembly includes a fixing base, a sleeve 4, and an anchor system; the fixing base is fixedly arranged on the seabed; the sleeve 4 is sleeved on the submarine cable that is located between the underwater configuration section 9 and the pre-buried submarine cable section 8; one end of the anchor system is fixedly connected to the fixing base, and the other end of the anchor system is slidably connected to the sleeve 4, providing additional slack for the underwater configuration section 9 to maintain the state stability of the underwater configuration section 9. The dynamic submarine cable 1 is located below the sea surface and is used for transmitting electrical energy and various signals. Since the dynamic submarine cable always performs fatigue operation under the action of waves, ocean currents, and platform offset, to ensure the profile configuration stability and service life of the submarine cable, in this embodiment, the underwater configuration section 9 is configured as a waveform state. The waveform state can provide more displacement slack, so that the dynamic submarine cable provides slack to maintain the configuration when it is at distal position, reducing a span used by vertical space and avoiding collision with the seabed. Moreover, through a sliding connection between the anchor system and the sleeve 4, additional slack can be provided to maintain the stability of the configuration of the dynamic submarine cable 1 when it is at distal position, and excess length can be recovered at a proximal position to maintain the stability of the configuration of the dynamic submarine cable 1.

It can be understood that in shallow sea areas, due to the limited seawater depth, the configuration of the underwater submarine cable is difficult, i.e., it is necessary to ensure that under significant wave and ocean current, the cable will not be straightened and tensioned at a distal position, and the cable will not interfere with the seabed at a proximal position, etc. In this embodiment, through the sliding connection between the anchor system and the sleeve 4, the sliding connection can provide additional slack for the submarine cable of the underwater configuration section 9 when the submarine cable is at a distal position, preventing the submarine cable from being straightened and tensioned; when the submarine cable is at a proximal position, the anchor system can recover the excess length, preventing the underwater configuration section 9 from interfering with the seabed.

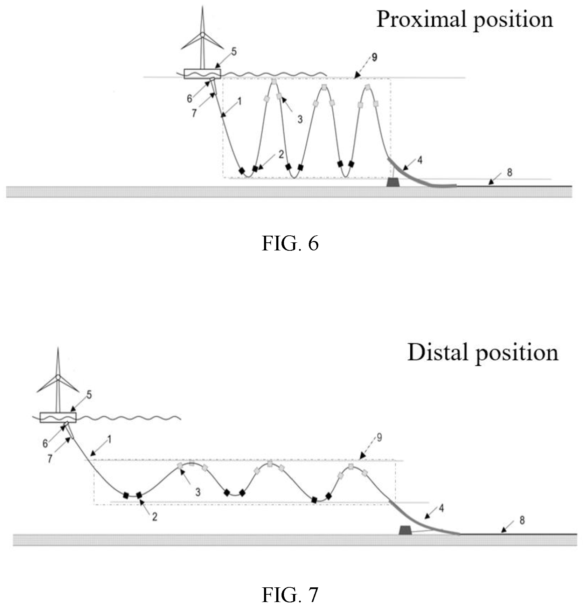

As shown in FIGS. 6 and 7, the distal position refers to a far position to which the dynamic submarine cable 1 extends under the driving of sea waves and currents, and the proximal position refers to a near position to which the dynamic submarine cable 1 contracts under the driving of sea waves and currents. That is, under sea waves and currents, the dynamic submarine cable 1 moves between the distal position and the proximal position. Ensuring the configuration stability of the dynamic submarine cable 1 at the distal and proximal positions is key to ensuring a good condition of the dynamic submarine cable 1. In this embodiment, the sliding connection between the anchor system and the sleeve 4 improves the stability of the underwater configuration section 9, thereby ensuring that the cable can maintain a stable underwater configuration in shallow sea areas.

The sleeve 4 is fixedly sleeved on the cable. One end of the anchor system is connected to the fixing base, and the other end of the anchor system is slidably connected to the sleeve 4, so that the anchor system can slide relative to an extension direction of the sleeve 4. When the dynamic submarine cable 1 is at the distal position, the anchor system moves along the sleeve 4 toward a direction of the seabed, thereby providing additional slack for the underwater configuration section 9, and ensuring a high overall stability. When the dynamic submarine cable 1 is at the proximal position, the anchor system slides relative to the sleeve 4 to an end near the underwater configuration section 9, recovers excess profile length of the anchor system, and maintains the configuration of the underwater configuration section 9, which prevents interference with the seabed, and avoids dangerous situations such as kinking, thereby generally playing a role in improving the operational reliability of the dynamic submarine cable 1 system.

According to a specific embodiment provided by the present invention, the sleeve 4 includes a pipe body 41 and a sliding structure 44. The pipe body 41 is sleeved on the submarine cable. The pipe body 41 is provided with a sliding slot 43. The sliding structure 44 is disposed in the sliding slot 43 so that the sliding structure 44 slides along the sliding slot 43. The anchor system is connected to the sliding structure 44. The sleeve 4 is a pipe-like structure as a whole. The pipe body 41 of the sleeve 4 is fixedly sleeved on the exterior of the cable. The sleeve 4 is provided with a sliding slot 43. The sliding structure 44 cooperates with the sliding slot 43 for sliding. The anchor system is connected to the sliding structure 44, so that the sliding structure 44 can drive the anchor system to slide together during sliding, and the sliding structure 44 is located at different positions when the anchor system is located at different positions.

It can be understood that the sliding structure 44 slides in the sliding slot 43 of the sleeve 4, and the sliding structure 44 is connected through the anchor system, so that when the dynamic submarine cable 1 is at different positions, the sliding structure 44 can provide auxiliary effects at different positions to improve the stability of the submarine cable of the underwater configuration section 9.

In specific configurations, in some embodiments, the sliding structure 44 includes a slider 441. The slider 441 is slidably cooperated with the sliding slot 43. The slider 441 is provided with a lifting device 45. The lifting device 45 is rotatably connected to the slider 441. The lifting device 45 is configured for connecting with the anchor system. The lifting device 45 is configured for fixed connection with the anchor system. The rotatable connection of the lifting device 45 enables the anchor system to operate stably in various postures.

It can be understood that the underwater dynamic submarine cable 1 continuously works under the action of sea waves and currents, exhibiting various postures. In this embodiment, the rotatable connection of the lifting device 45 can ensure the connection stability of the anchor system, preventing the anchor system from being pulled and rotated, which causes damage to the anchor system.

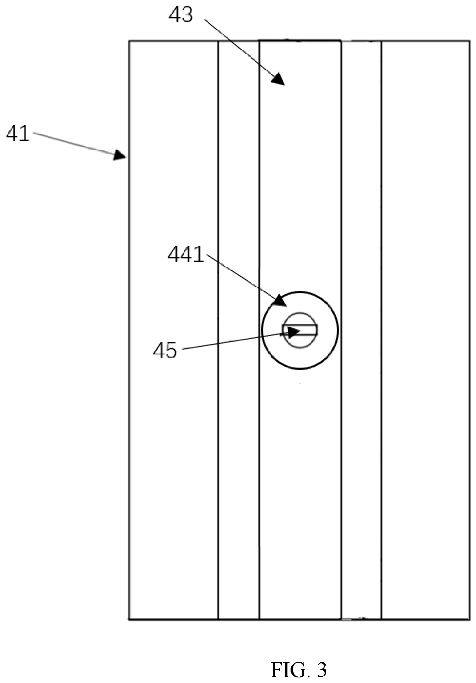

In a specific example, as shown in FIGS. 2 and 3, the exterior of the sleeve 4 body is made of polyurethane material. A metal frame 42 is provided inside the sleeve 4. The metal frame 42 and a shell of the outer sleeve 4 are provided with a sliding slot 43. The slider 441 is slidably cooperated with the sliding slot 43, so that the slider 441 can slide along the sliding slot 43. The arrangement of the metal frame 42 can improve the overall structural strength of the sleeve 4, increasing its bearing capacity.

According to some embodiments provided by the present invention, the sliding slot 43 is arranged spirally around the pipe body 41. That is, the sliding slot 43 is formed in a spiral structure. This allows the sliding structure 44 to have more degrees of freedom in displacement when the posture of a tail of the dynamic submarine cable 1 changes, enabling better adjustment of the profile slack. It also allows various parts of the surface of the sleeve 4 to bear loads, avoiding deformation caused by local overuse, improving the fatigue life of the sleeve 4, and reducing the design cost of the sleeve 4.

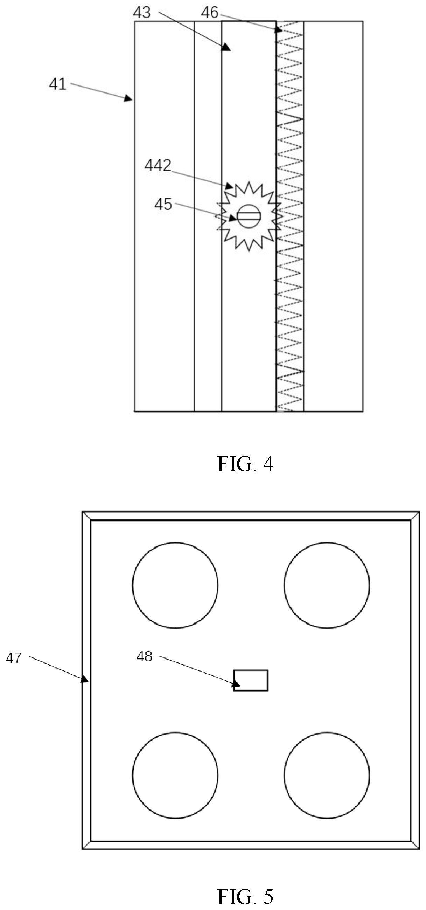

According to another embodiment provided by the present invention, as shown in FIG. 4, the sliding structure 44 includes a gear 442 and a rack 46. The rack 46 is embedded in one side wall of the sliding slot 43. The gear 442 is slidably arranged in the sliding slot 43, and the gear 442 can rotate about its own central axis. The gear 442 meshes with the rack 46. The gear 442 is provided with a lifting device 45, and the lifting device 45 is rotatably connected to the gear 442. In addition to directly using the slider 441 for sliding, this embodiment provides a sliding structure 44 where the gear 442 is cooperated with the rack 46. The arraignment of the gear 442 and the rack 46 makes sliding smoother, thereby achieving stable adjustment of the sleeve.

In specific configuration, the gear 442 and the rack 46 are made of metal materials, and the exterior of the gear 442 and the rack 46 is provided with an anti-corrosion coating, so as to be suitable for use in a seawater environment and improve the service life of the structure. Alternatively, the gear 442 and the rack 46 are made of high-strength plastic materials to prevent corrosion in seawater. Of course, since the solution of the present invention is applied in shallow sea areas, providing an anti-corrosion coating is sufficient to meet usage requirements and ensure service life.

It can be understood that, during changes in the position and posture of the dynamic submarine cable 1, the fixing assembly realizes a length adjustment of a section of the dynamic submarine cable 1 near the seabed through the movement of the gear 442 on the rack 46. When the floating platform 5 is at the distal position, additional profile length slack is provided to prevent the cable from being straightened and tensioned; when the floating platform is at the proximal position, excess profile length slack is recovered to prevent the cable from kinking.

In specific configuration, the sleeve 4 is relatively long, specifically extending from the underwater configuration section 9 to the pre-buried submarine cable section 8, so as to completely cover the section of the dynamic submarine cable 1 that contacts the seabed. The sleeve 4 is used to prevent direct contact between the dynamic submarine cable and the seabed, which provides anti-wear protection for a lower part of the dynamic submarine cable 1, thereby improving the service life of the submarine cable.

It can be understood that, during changes in the posture of the dynamic submarine cable 1, the lower part of the submarine cable contacts and rubs against the seabed, causing severe wear to the lower part of the submarine cable. In this embodiment, by sleeving the sleeve 4, protection for the lower part of the submarine cable is achieved, avoiding severe wear of the lower part of the submarine cable during posture changes and improving the service life of the submarine cable.

According to an embodiment provided by the present invention, the floating platform 5 is provided with a power generation module, and the power generation module is electrically connected to the dynamic submarine cable 1. The power generation module can fully utilize the resources in nearshore sea areas to generate electricity, thereby providing electrical energy for the entire system and achieving power transmission.

In specific configurations, the power generation module includes at least one of a photovoltaic power generation module, a wind power generation module, and a tidal energy power generation module. By providing various power generation modules, full utilization of nearshore sea area resources can be achieved, enabling effective power generation.

According to the dynamic submarine cable 1 system suitable for shallow sea areas provided by the present invention, a body of the submarine cable of the underwater configuration section 9 is provided with buoyancy devices 3 and counterweight devices 2. The buoyancy devices 3 and the counterweight devices 2 are alternately arranged at intervals, so as to form a waveform state through the buoyancy devices 3 and the counterweight devices 2.

According to embodiments provided by the present invention, the fixing base includes a counterweight plate 47. The counterweight plate 47 is arranged on the seabed. The counterweight plate 47 is provided with a connection structure 48. The connection structure 48 is rotatably connected to the counterweight plate 47. The counterweight plate 47 is a main structure of the fixing base, which can serve as an anchoring foundation, constraining an activity range of the anchor system in the near-seabed section of the dynamic submarine cable, and maintaining the stability of the underwater configuration section 9 at distal and proximal positions, thereby improving the overall stability of the system.

Where, the connection structure 48 is a lifting device. The connecting structure 48 can realize omnidirectional rotation through a rotary connection mode, thereby preventing the anchor system from being damaged during changes in the posture of the dynamic submarine cable 1.

According to an embodiment provided by the present invention, a bend stiffener 7 is provided at a connection between the dynamic submarine cable 1 and the floating platform 5, where the bend stiffener 7 is used to prevent excessive bending of the dynamic submarine cable 1. Specifically, a bottom of the floating platform 5 is provided with an anchoring part 6, and the bend stiffener 7 is connected to the anchoring part 6. A connection of the bend stiffener 7 to the dynamic submarine cable 1 can prevent excessive bending of the dynamic submarine cable 1, achieving protection for the dynamic submarine cable 1 at the platform.

Through the description of the above embodiments, those skilled in the art can clearly understand that in shallow sea areas, where the water depth is relatively shallow and waves and ocean currents are relatively large, the operating environmental conditions for the dynamic submarine cable 1 used for floating platforms are relatively harsh. The profile of dynamic submarine cable 1 must not only meet the platform offset requirements but also ensure that it does not emerge from the water or interfere with the seabed in a vertical direction, making it more difficult for profile construction. The underwater dynamic submarine cable 1 system provided by the present invention enables the dynamic submarine cable 1 to meet the usage requirements of floating platforms in relatively shallow waters. It provides sufficient slack to allow the submarine cable to meet the significant offset requirements of the floating platform, while reducing the risk of the dynamic submarine cable 1 floating out of the water or interfering with the seabed in the vertical direction, thereby enabling the floating platform to operate smoothly in shallow sea water areas.

Finally, it should be noted that the above embodiments are only used to illustrate the technical solutions of the present invention, rather than to limit them. Although the present invention has been described in detail with reference to the foregoing embodiments, a person of ordinary skill in the art should understand that they can still modify the technical solutions described in the foregoing embodiments, or make equivalent substitutions for some of the technical features thereof. These modifications or substitutions do not cause the essence of the corresponding technical solutions to deviate from the spirit and scope of the technical solutions of the embodiments of the present invention.

## Claims

1. An underwater dynamic submarine cable system suitable for shallow sea areas, comprising:
a floating platform;
a dynamic submarine cable comprising an underwater configuration section and a pre-buried submarine cable section, the underwater configuration section being configured in a waveform state, and the pre-buried submarine cable section being fixedly arranged on a seabed;
a fixing assembly comprising a fixing base, a sleeve, and an anchor system, the fixing base being fixedly arranged on the seabed, the sleeve being sleeved on asubmarine cable located between the underwater configuration section and the pre-buried submarine cable section, one end of the anchor system being fixedly connected to the fixing base, and the other end of the anchor system being slidably connected to the sleeve, to provide additional profile slack for the underwater configuration section and maintain state stability of the underwater configuration section.

2. The underwater dynamic submarine cable system suitable for shallow sea areas according to claim 1, wherein the sleeve comprises a pipe body and a sliding structure, the pipe body is sleeved on the submarine cable, the pipe body is provided with a sliding slot, the sliding structure is disposed in the sliding slot so that the sliding structure slides along the sliding slot, and the anchor system is connected to the sliding structure.

3. The underwater dynamic submarine cable system suitable for shallow sea areas according to claim 2, wherein the sliding structure comprises a slider, the slider is slidably cooperated with the sliding slot, the slider is provided with a lifting device, the lifting device is rotatably connected to the slider, and the lifting device is configured for connecting with the anchor system.

4. The underwater dynamic submarine cable system suitable for shallow sea areas according to claim 2, wherein the sliding slot is arranged spirally around the pipe body.

5. The underwater dynamic submarine cable system suitable for shallow sea areas according to claim 2, wherein the sliding structure comprises a gear and a rack, the rack is embedded in one side wall of the sliding slot, the gear is slidably arranged in the sliding slot, and the gear is rotatable about its own central axis, the gear is meshed with the rack, and the gear is provided with a lifting device that is rotatably connected to the gear.

6. The underwater dynamic submarine cable system suitable for shallow sea areas according to claim 1, wherein the floating platform is provided with a power generation module, and the power generation module is electrically connected to the dynamic submarine cable.

7. The underwater dynamic submarine cable system suitable for shallow sea areas according to claim 1, wherein a submarine cable body of the underwater configuration section is provided with buoyancy devices and counterweight devices, the buoyancy devices and the counterweight devices are alternately arranged at intervals, so as to form a waveform state through the buoyancy devices and the counterweight devices.

8. The underwater dynamic submarine cable system suitable for shallow sea areas according to claim 1, wherein the fixing base comprises a counterweight plate, the counterweight plate is arranged on the seabed, the counterweight plate is provided with a connection structure, and the connection structure is rotatably connected to the counterweight plate.

9. The underwater dynamic submarine cable system suitable for shallow sea areas according to claim 1, wherein a bend stiffener is provided at a connection between the dynamic submarine cable and the floating platform, and the bend stiffener is configured to prevent excessive bending of the dynamic submarine cable.

10. The underwater dynamic submarine cable system suitable for shallow sea areas according to claim 1, wherein the sleeve extends from the underwater configuration section to the pre-buried submarine cable section, so as to completely cover a section of the dynamic submarine cable that contacts the seabed, and the sleeve is configured to prevent direct contact between the dynamic submarine cable and the seabed.
